# EUROPÄISCHE PATENTANMELDUNG

(11) **EP 1 150 023 A2**
(43) Veröffentlichungstag der Anmeldung: **31.10.2001**
(21) Anmeldenummer: 01109079.2
(22) Anmeldetag: 12.04.2001
(51) Int. Cl.: F16B 13/08, F16B 13/06

(54) **Anker für weiche und poröse Baustoffe**

(30) Priorität: 26.04.2000 DE 10020482
(71) Anmelder: fischerwerke Artur Fischer GmbH & Co. KG, 72178 Waldachtal (DE)
(72) Erfinder: Linka, Martin, 72160 Horb (DE); Gallatz, Armin, 72186 Empfingen (DE)

(57) **Zusammenfassung**

Die Erfindung betrifft einen Anker (10) zur Verankerung in einem weichen oder porösen Baustoff wie beispielsweise Poren- oder Gasbeton. Die Erfindung schlägt vor, den Anker (10) mit schräg nach außen vom Anker (10) abstehend aufspreizbaren Spreizzungen (34, 36) auszubilden, die von einer Distanzhülse (30) in axialem Abstand voneinander gehalten werden. Durch den axialen Abstand der Spreizzungen (34, 36) voneinander ist ein Verankerungsbereich des Ankers (10) im Baustoff axial vergrößert, wodurch die Verankerung verbessert ist (Figur 2).

## Beschreibung

Die Erfindung betrifft einen Anker für weiche oder poröse Baustoffe wie beispielsweise Poren- oder Gasbeton mit den Merkmalen des Oberbegriffs des Anspruchs 1.

Ein derartiger Anker ist bekannt aus der DE-G 73 24 827. Der bekannte Anker weist zweimal vier Spreizzungen auf, die mittels einer Spreizeinrichtung in eine schräg in entgegengesetzten Richtungen nach außen vom Anker abstehende Spreizstellung aufspreizbar sind. Beim Aufspreizen dringen die Spreizzungen in den weichen oder porösen Baustoff ein und verankern dadurch den Anker im Baustoff. Der bekannte Anker hat den Nachteil, dass die Spreizzungen dicht beieinander angeordnet sind und dadurch den Baustoff in einem vergleichsweise kleinen Bereich beanspruchen.

Der Erfindung liegt die Aufgabe zugrunde, die Verankerung eines Ankers der vorstehend genanten Art in einem weichen oder porösen Baustoff zu verbessern.

Diese Aufgabe wird erfindungsgemäß durch die Merkmale des Anspruchs 1 gelöst. Beim erfindungsgemäßen Anker sind die Spreizzungen zumindest in der Spreizstellung mit einem axialen Abstand voneinander angeordnet, wobei die Spreizzungen schräg oder auch radial nach außen vom Anker abstehen können. Durch den axialen Abstand der Spreizzungen wird ein Verankerungsbereich des erfindungsgemäßen Ankers axial vergrößert. Mit Verankerungsbereich ist der Bereich gemeint, in welchem die Spreizzungen beim Aufspreizen in den Baustoff eindringen und in welchem die Spreizzungen in der Spreizstellung den Baustoff beanspruchen. Durch die Vergrößerung des Verankerungsbereichs wird die örtliche Beanspruchung des Baustoffs, also die auf das Volumen bezogene Beanspruchung, bei einer Belastung des Ankers verringert. Die begrenzte Festigkeit eines weichen oder porösen Baustoffs wird besser genutzt, die Verankerung des Ankers in einem weichen oder porösen Baustoff ist verbessert, der Anker ist insbesondere auf Zug in axialer Richtung höher belastbar.

Als Spreizeinrichtung weist der Anker bei einer Ausgestaltung der Erfindung eine Zugstange auf, auf die eine Druckhülse aufgesetzt ist. Durch Verschieben der Druckhülse auf der Zugstange werden die Spreizzungen nach außen gedrückt und aufgespreizt.

Um die Spreizzungen in axialem Abstand voneinander zu halten weist der Anker bei einer Ausgestaltung der Erfindung ein Distanzelement auf, das insbesondere als auf die Zugstange aufgesetzte Distanzhülse ausgebildet ist.

Die Spreizzungen können in derselben Richtung oder in entgegengesetzten Richtungen aufspreizen, so dass sie, wenn sie in der Spreizstellung nicht radial, sondern schräg vom Anker abstehen, näherungsweise parallel oder in entgegengesetzten Richtungen schräg vom Anker abstehen. Sind die Spreizzungen in entgegengesetzten Richtungen aufgespreizt, können in einer Richtung schräg abstehende Spreizzungen die in entgegengesetzter Richtung aufgespreizten Spreizzungen abstützen. Erstere Spreizzungen bilden in diesem Fall Stützelemente für die in entgegengesetzter Richtung aufgespreizten Spreizzungen, die verhindern, dass bei axialer Belastung des Ankers auf Zug die Spreizzungen in Richtung einer Anlage am Anker gedrückt werden, so dass der Anker aus dem Baustoff heraus gezogen werden kann.

Die Spreizzungen können bei einer Ausgestaltung der Erfindung in ihrer Spreizstellung in axialer Richtung gesehen im wesentlichen deckungsgleich, also in derselben Winkelrichtung vom Anker abstehen. Da die Spreizzungen axialen Abstand voneinander aufweisen, ist es im Hinblick auf eine gute Verankerung des Ankers weniger kritisch, wenn die Spreizzungen in axialer Richtung gesehen deckungsgleich vom Anker abgespreizt sind und somit den Baustoff in derselben Richtung vom Anker aus gesehen beanspruchen.

Bei einer Ausgestaltung der Erfindung ist vorgesehen, dass die Spreizzungen in ihrer Spreizstellung in axialer Richtung gesehen versetzt zueinander vom Anker abstehen, damit der Baustoff von den axial voneinander beabstandeten Spreizzungen auch in unterschiedlichen Winkelrichtungen vom Anker aus gesehen beansprucht wird. Durch diese Ausgestaltung der Erfindung wird die Beanspruchung des Baustoffs bei Belastung des Ankers noch besser verteilt und die örtliche Beanspruchung des Baustoffs weiter herabgesetzt. Dadurch wird die Verankerung des erfindungsgemäßen Ankers weiter verbessert, seine Belastbarkeit insbesondere durch axialen Zug wird gesteigert.

Um die Spreizzungen in ihrer Winkelstellung zueinander zu fixieren ist bei einer Ausgestaltung der Erfindung vorgesehen, die Spreizzungen über das Distanzelement drehfest miteinander zu verbinden.

Um das Aufspreizen der Spreizzungen zu erleichtern schlägt eine Ausgestaltung der Erfindung Aufgleitflächen am Anker vor, die die Spreizzungen beim Aufspreizen vom Anker nach außen drücken. Die Aufgleitflächen können Außenfasen an einer auf den Anker aufgesetzten Hülse oder einem Widerlager sein, an denen die Spreizzungen beim Aufspreizen mit ihren freien Stirnenden aufgleiten. Auch können die Aufgleitflächen Innenfasen an den freien Stirnenden der Spreizzungen sein.

Um den Anker schnell und einfach in einem weichen oder porösen Baustoff verankern zu können schlägt eine Ausgestaltung der Erfindung vor, den Anker mit einer Einschlagspitze auszubilden. Der Anker lässt sich dadurch ohne Vorbohren in einen weichen oder porösen Baustoff einschlagen und anschließend aufspreizen.

Die Erfindung wird nachfolgend anhand in der Zeichnung dargestellter Ausführungsbeispiele näher erläutert. Es zeigen:
- Figur 1: einen erfindungsgemäßen Anker im Achsschnitt;
- Figur 2: den Anker aus Figur 1 in Spreizstellung;
- Figur 3: den Anker aus Figur 2 in Stirnansicht gemäß Pfeil III in Figur 1;
- Figuren 4 bis 6: abgewandelte Ausführungsformen des Ankers aus Figur 1 gemäß der Erfindung, wobei die beiden Anker in Figuren 5 und 6 in einer Figur 2 entsprechenden Spreizstellung dargestellt sind.

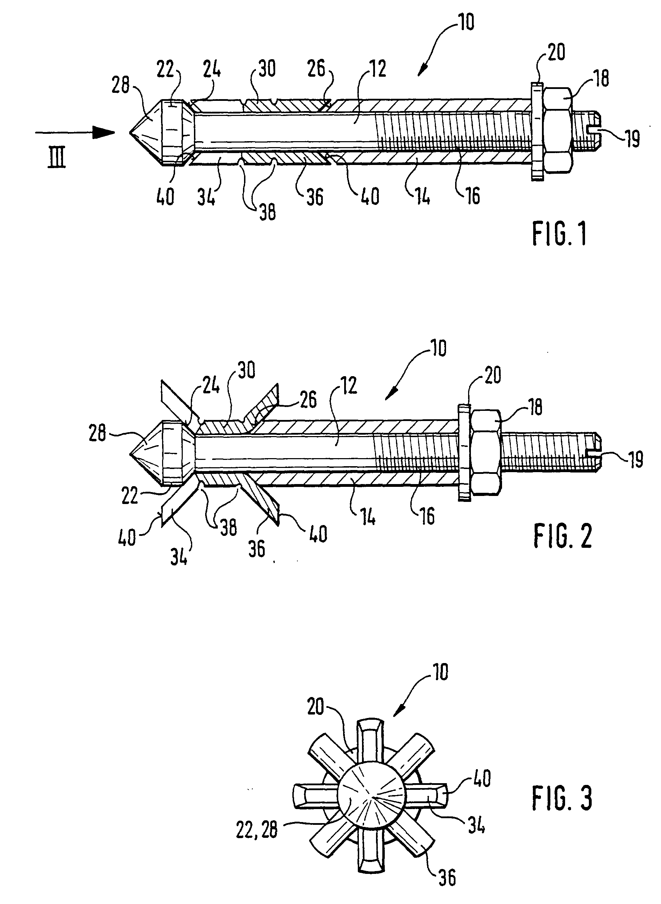

Der in Figur 1 dargestellte, erfindungsgemäße Anker 10 ist zur Verankerung in einem weichen oder porösen Baustoff wie Poren- oder Gasbeton vorgesehen. Der Anker 10 weist eine Zugstange 12 auf, auf deren hinteres Ende eine Druckhülse 14 aufgesetzt ist. Die Zugstange 12 und die Druckhülse 14 bilden eine Spreizeinrichtung 12, 14 zum Aufspreizen des Ankers 10.

Die Zugstange 12 weist an ihrem hintern Ende ein Gewinde 16 auf, auf welches eine Mutter 18 aufgeschraubt ist, wobei eine Unterlegscheibe 20 zwischen der Mutter 18 und der Druckhülse 14 einliegt. Zum Aufspreizen des Ankers 10 lässt sich durch Verdrehen der Mutter 18 auf dem Gewinde 16 die Druckhülse 14 auf der Zugstange 12 verschieben. Am hinteren Ende weist die Zugstange 12 einen Schraubenschlitz 19 zum Gegenhalten beim Verdrehen und Anziehen der Mutter 18 auf.

An ihrem vorderen Ende weist die Zugstange 12 einen mit ihr einstückigen Kopf 22 auf, der einen größeren Durchmesser als die Zugstange 12 aufweist. Die Durchmesservergrößerung erfolgt an einer Außenfase des Kopfs 22, die eine Aufgleitfläche 24 bildet. Die Druckhülse 14 ist an ihrem dem Kopf 22 zugewandten Ende ebenfalls mit einer Außenfase versehen, die eine Aufgleitfläche 26 bildet.

An seinem vorderen, der Mutter 18 abgewandten Seite weist der Kopf 22 eine Einschlagspitze 28 auf, die es ermöglicht, den Anker 10 ohne Vorbohren in einen weichen Baustoff wie beispielsweise Gasbeton einzuschlagen.

Zwischen der Druckhülse 14 und dem Kopf 22 ist eine weitere Hülse 30 auf die Zugstange 12 des erfindungsgemäßen Ankers 10 aufgesetzt. Diese Hülse 30 ist zur Bildung von Spreizzungen 34, 36 von beiden Enden her geschlitzt. Im dargestellten Ausführungsbeispiel ist die Hülse 30 von beiden Enden her über Kreuz geschlitzt, so dass jeweils vier Spreizzungen 34, 36 achsparallel von beiden Seiten der Hülse 30 abstehen. Die Anzahl der Schlitze und damit der Spreizzungen 34, 36 kann allerdings variieren. Zudem sind die Schlitze und damit die Spreizzungen 34, 36 bei dem in Figur 1 dargestellten Ausführungsbeispiel der Erfindung im Winkel versetzt zueinander, weswegen die einen Spreizzungen 34 in Ansicht und die anderen Spreizzungen 36 geschnitten dargestellt sind.

Ein mittlerer Bereich der Hülse 30 ist schlitzfrei, er bildet eine Distanzhülse 30, die die Spreizzungen 34, 36 in axialem Abstand voneinander hält. Der Übergang von der Distanzhülse 30 zu den Spreizzungen 34, 36 erfolgt an umlaufenden Einkerbungen oder Nuten 38, die Schwenk- oder Biegelinien für die Spreizzungen 34, 36 bilden.

Freie, einander abgewandte Stirnenden der Spreizzungen 34, 36 weisen Innenfasen auf, die Aufgleitflächen 40 bilden, die mit der Aufgleitfläche 24 des Kopfs 22 der Zugstange 12 bzw. mit der Aufgleitfläche 26 der Druckhülse 14 zusammenwirken.

Die Funktion des erfindungsgemäßen Spreizankers 10 ist folgende: Der Spreizanker 10 wird wie bereits beschrieben ohne Vorbohren in einen weichen Baustoff wie beispielsweise Gasbeton eingeschlagen oder auch in ein Bohrloch in dem Baustoff eingebracht. Anschließend wird die Mutter 18 auf dem Gewinde 16 in Richtung des Kopfs 22 an dem der Mutter 18 fernen, vorderen Ende der Zugstange 12 geschraubt. Dabei schiebt die Mutter die Druckhülse 14 in Richtung des Kopfs 22. Die Spreizzungen 34, 36 stoßen mit ihren Aufgleitflächen 40 gegen die Aufgleitfläche 24 des Kopfs 22 bzw. die Aufgleitfläche 26 der Druckhülse 14 und werden dadurch nach außen gedrückt. Beim weiteren Verdrehen der Mutter 18 gleiten die Spreizzungen 34, 36 an der Aufgleitfläche 24 des Kopfs 22 bzw. der Aufgleitfläche 26 der Druckhülse 14 entlang und werden dadurch weiter nach außen gedrückt, bis sie schräg unter einem Winkel von beispielsweise etwa 45° vom Anker 10 nach außen abstehen. Diese schräg nach außen abstehende Spreizstellung der Spreizzungen 34, 36 ist in Figuren 2 und 3 dargestellt. Beim nach außen Drücken bzw. Aufspreizen dringen die Spreizzungen 34, 36 in den Baustoff ein und verankern dadurch den Anker 10 im Baustoff. In der Stirnansicht von Figur 3 ist gut die winkelversetzte Anordnung zwischen den nach vorn abstehenden Spreizzungen 34 und den nach hinten abstehenden Spreizzungen 36 zu sehen.

Grundsätzlich ist es auch möglich, den Anker 10 mit mehr als den zwei in Figuren 1 bis 3 dargestellten Sätzen axial voneinander beabstandeten Spreizzungen 34, 36 auszubilden (nicht dargestellt).

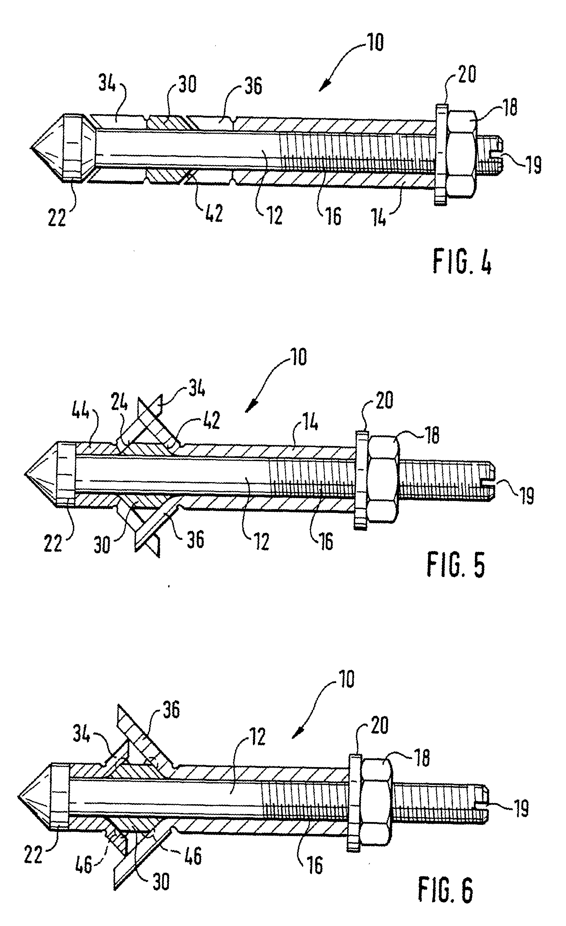

Bei der Erläuterung der in Figuren 4 bis 6 dargestellten, abgewandelten, erfindungsgemäßen Anker 10 werden nachfolgend im wesentlichen nur die Unterschiede zu dem in Figuren 1 bis 3 dargestellten Anker 10 erläutert und im übrigen wird auf die vorstehenden Ausführungen verwiesen. Für gleiche Teile werden gleiche Bezugszahlen verwendet.

Bei dem in Figur 4 dargestellten, erfindungsgemäßen Anker 10 weist die Distanzhülse 30 nur die nach vorn abstehenden Spreizzungen 34 auf. An ihrem hinteren Ende ist die Spreizhülse 30 mit einer Außenfase versehen, die eine Aufgleitfläche 42 bildet. Anstelle der nach hinten gerichteten Spreizzungen weist beim Anker 10 aus Figur 4 die Druckhülse 14 nach vorn gerichtete Spreizzungen 36 auf, die beim Aufspreizen durch Drehen der Mutter 18 von der Aufgleitfläche 42 der Distanzhülse 30 nach außen gedrückt, d. h. aufgespreizt werden. Beim Anker 10 aus Figur 4 werden alle Spreizzungen 34, 36 in derselben Richtung aufgespreizt, in der nicht dargestellten Spreizstellung stehen die Spreizzungen 34, 36 in derselben Richtung, nämlich schräg nach außen und vorn vom Anker 10 ab.

Weiterer Unterschied des Ankers 10 aus Figur 4 zum Anker 10 aus Figuren 1 bis 3 ist, dass beim Anker 10 aus Figur 4 die Spreizzungen 34, 36 nicht im Winkel versetzt sondern in axialer Richtung gesehen deckungsgleich angeordnet sind. Dies ist in Figur 4 dadurch erkennbar, dass die Spreizzungen 34, 36 alle in Ansicht und nicht geschnitten zu sehen sind.

Durch die in axialer Richtung deckungsgleiche Anordnung der Spreizzungen 34, 36 in Figur 4 wären bei einer Figur 3 entsprechenden Stirndarstellung nur die weiter vorn angeordneten Spreizzungen 34 sichtbar, die weiter hinten angeordneten Spreizzungen 36 wären von den weiter vorn angeordneten Spreizzungen 34 verdeckt.

Im übrigen ist der Anker 10 aus Figur 4 gleich ausgebildet und funktioniert in gleicher Weise wie der in Figuren 1 bis 3 dargestellte Anker 10. Die Distanzhülse 30 hält die Spreizzungen 34, 36 in axialem Abstand voneinander.

Bei dem in Figur 5 dargestellten, erfindungsgemäßen Anker 10 stehen die Spreizzungen 34, 36 in entgegengesetzten Richtungen vom Anker 10 ab, allerdings umgekehrt wie in Figuren 1 bis 3, stehen in Figur 5 die weiter vom angeordneten Spreizzungen 34 nach hinten und die weiter hinten angeordneten Spreizzungen 36 nach vorn vom Anker 10 ab. Aus diesem Grund sind die weiter vorn angeordneten Spreizzungen 34 an einer zusätzlichen Hülse 44 ausgebildet, die am Kopf 22 der Zugstange 12 anliegt. Die weiter hinten angeordneten Spreizzungen 36 sind wie auch in Figur 4 an der Druckhülse 14 ausgebildet. Zwischen den Spreizzungen 34, 36 ist die Distanzhülse 30 angeordnet, die beim Anker 10 aus Figur 5 ein separates Bauteil ohne Spreizzungen ist. Die Distanzhülse 30 weist an ihren beiden Enden Außenfasen auf, die die Aufgleitflächen 24, 42 bilden. Die Spreizzungen 34, 36 sind in axialer Richtung gesehen versetzt zueinander angeordnet, in der dargestellten Spreizstellung kreuzen die Spreizzungen 34, 36 einander.

Der in Figur 6 dargestellte, erfindungsgemäße Anker 10 ist ähnlich wie der Anker 10 aus Figur 5 ausgebildet. Auch bei dem in Figur 6 dargestellten Anker 10 stehen die weiter vorn angeordneten Spreizzungen 34 nach hinten und die weiter hinten angeordneten Spreizzungen 36 nach vorn vom Anker 10 ab. Allerdings sind in Figur 6 die weiter vorn angeordneten Spreizzungen 34 kürzer als die weiter hinten angeordneten Spreizzungen 36. In der dargestellten Spreizstellung stoßen die kürzeren Spreizzungen 34 mit ihren freien Enden gegen Innenseiten der längeren Spreizzungen 36, die kürzeren Spreizzungen 34 bilden Stützelemente für die längeren Spreizzungen 36, die die längeren Spreizzungen 36 in der schräg nach außen vom Anker 10 abstehenden Spreizstellung halten. Die Stützelemente 34 verhindern, dass bei axialem Zug am Anker 10 die längeren Spreizzungen 36 nach innen zur Zugstange 12 gedrückt werden, wodurch sich die Verankerung des Ankers 10 im Baustoff lösen und der Anker mit vergleichsweise niedriger Kraft aus dem Baustoff herausgezogen werden könnte. Damit die die Stützelemente 34 bildenden kürzeren Spreizzungen 34 wie vorgesehen an den Innenseiten der längeren Spreizzungen 36 anliegen, sind die Stützelemente 34 und die Spreizzungen 36 in axialer Richtung gesehen deckungsgleich angeordnet. Um die deckungsgleiche Anordnung der Stützelemente 34 und der Spreizzungen 36 sicher zu stellen, sind die Stützelemente 34 über die Distanzhülse 30 drehfest mit den Spreizzungen 36 verbunden. Die drehfeste Verbindung erfolgt mittels von der Distanzhülse 30 nach außen abstehender Nasen 46, die zwischen die Stützelemente 34 und zwischen die Spreizzungen 36 eingreifen. Die Nasen 46 sind in Figur 6 im Stichlinien angedeutet, da sie sich außerhalb der Zeichenebene befinden.

## Patentansprüche

1. Anker für weiche oder poröse Baustoffe, mit Spreizzungen und mit einer Spreizeinrichtung zum Aufspreizen der Spreizzungen in eine nach außen vom Anker abstehende Spreizstellung, **dadurch gekennzeichnet, dass** die Spreizzungen (34, 36) mit axialem Abstand voneinander angeordnet sind.

2. Anker nach Anspruch 1, **dadurch gekennzeichnet, dass** der Anker (10) eine Zugstange (12) und eine auf diese aufgesetzte Druckhülse (14) als Spreizeinrichtung (12, 14) zum Aufspreizen der Spreizzungen (34,36) aufweist.

3. Anker nach Anspruch 1, **dadurch gekennzeichnet, dass** der Anker (10) ein Distanzelement (30) aufweist, das die Spreizzungen (34, 36) in axialem Abstand voneinander hält.

4. Anker nach Anspruch 1, **dadurch gekennzeichnet, dass** die Spreizzungen (34, 36) in derselben Richtung aufspreizen.

5. Anker nach Anspruch 1, **dadurch gekennzeichnet, dass** die Spreizzungen (34, 36) in entgegengesetzten Richtungen aufspreizen.

6. Anker nach Anspruch 1, **dadurch gekennzeichnet, dass** die Spreizzungen (34, 36) in der Spreizstellung in axialer Richtung gesehen im wesentlichen deckungsgleich vom Anker (10) abstehen.

7. Anker nach Anspruch 1, **dadurch gekennzeichnet, dass** die Spreizzungen (34, 36) in der Spreizstellung in axialer Richtung gesehen versetzt zueinander vom Anker (10) abstehen.

8. Anker nach Anspruch 3, **dadurch gekennzeichnet, dass** das Distanzelement (30) drehfest mit den Spreizzungen (34, 36) ist.

9. Anker nach Anspruch 1, **dadurch gekennzeichnet, dass** der Anker (10) Aufgleitflächen (24, 26, 40, 42) aufweist, die die Spreizzungen (34, 36) beim Aufspreizen nach außen drücken.

10. Anker nach Anspruch 1, **dadurch gekennzeichnet, dass** der Anker (10) eine Einschlagspitze (28) aufweist.
